## Europäisches Patentamt
## European Patent Office
## Office européen des brevets

(19)

(11) Numéro de publication: **0 082 068**
**B1**

(12) **FASCICULE DE BREVET EUROPEEN**

(45) Date de publication du fascicule du brevet:
23.10.85

(51) Int. Cl.⁴: **F 24 J 2/00**

(21) Numéro de dépôt: **82402245.3**

(22) Date de dépôt: **08.12.82**

(54) Structure de support pour capteur solaire.

(30) Priorité: **11.12.81 FR 8123156**

(43) Date de publication de la demande:
**22.06.83 Bulletin 83/25**

(45) Mention de la délivrance du brevet:
**23.10.85 Bulletin 85/43**

(84) Etats contractants désignés:
**BE DE FR IT LU NL**

(56) Documents cités:
**FR - A - 1 591 114**
**FR - A - 2 112 013**
**US - A - 3 913 105**
**US - A - 4 171 876**
**US - A - 4 281 900**

(73) Titulaire: **CREUSOT-LOIRE, 42 rue d'Anjou,
F-75008 Paris (FR)**

(72) Inventeur: **Sevelinge, Gérard, 9 rue de St. Gengoux,
F-71300 Montceau-les-Mines (FR)**
Inventeur: **Pido, Jean-Claude, Parc du Tennis - Bt. P 31,
F-71200 Le Creusot (FR)**

(74) Mandataire: **Bressand, Georges et al, c/o CABINET
LAVOIX 2 Place d'Estienne d'Orves, F-75441 Paris
Cedex 09 (FR)**

BUNDESDRUCKEREI BERLIN

## Description

L'invention a pour objet une structure de support pour capteur solaire du type comprenant un miroir concave destiné à concentrer les rayons captés vers un foyer où peut être placée, par exemple, une chaudière.

Le miroir n'ayant pas de rigidité propre doit être placé sur une structure de support, et, le plus souvent, celle-ci a la forme d'une coupole concave centrée sur un axe de visée et montée articulée autour d'un axe d'orientation en Azimut et d'un axe d'orientation et Site de façon à permettre l'orientation de l'axe de visée vers le soleil pour capter à tout moment le maximum d'énergie.

La structure de support doit être rigide et ne pas se déformer au cours du temps de façon à conserver le profil de la surface réfléchissante. Cette rigidité doit en outre être assurée quelles-que soient les orientations de l'axe de visée.

On peut réaliser la structure de support au moyen d'un ensemble de profilés assemblés selon les techniques classiques de la construction métallique. Cependant, un capteur solaire étant d'assez grande dimension, il est nécessaire de prévoir au moins une faculté de démontage de la structure ainsi que de la surface réfléchissante de façon à permettre le transport sur le site d'un certain nombre d'éléments peu encombrants qui doivent être facilement assemblés sur place.

Les capteurs solaires pouvant être construits dans des régions isolées d'accès parfois difficiles, on a cherché des moyens pour réaliser une structure de support facilement transportable et montable sur le site et, à cet effet on a déjà proposé de réaliser la structure de support selon une technique bien connue pour les échafaudages, c'est-à-dire sous la forme d'un ensemble de barres reliées par des noeuds d'assemblage. Une structure de ce genre est décrite par exemple dans EP-A-0 025 320. Dans un tel système, la coupole concave est constituée d'un treillis triangulaire qui se dévelope autour d'un noeud central placé sur l'axe. Selon la forme à donner à la coupole, on peut imaginer divers assemblages de formes géométriques, mais il est intéressant que les assemblages soient réalisés à base de triangles, la surface réfléchissante pouvant alors être constituée de facettes triangulaires fixées sur les barres.

Un tel treillis triangulé concave n'a pas en lui-même une résistance suffisante pour l'usage recherché et c'est pourquoi il est associé à un treillis de raidissement qui se rattache au treillis concave le long du bord extérieur de ce dernier et en est maintenu écarté par des barres transversales formant poinçons.

Dans un autre mode de réalisation, décrit dans le document FR-A-2 112 013, le treillis de raidissement est placé à l'extérieur du treillis concave dont l'intérieur est ainsi dégagé. Le treillis extérieur comprend essentiellement six noeuds en hexagone reliés aux six noeuds correspondants du treillis concave par des barres formant poinçon qui maintiennent l'écartement et assurent le raidissement. L'ensemble est fixé de façon réglable sur un pylone de support par trois de ces noeuds formant un triangle équilatéral de façon à permettre le réglage de l'antenne en site et en azimut.

Cette disposition est prévue pour une antenne radioélectrique de très grande dimension fixée à demeure sur un pylone par trois noeuds de l'hexagone extérieur, ce qui permet un réglage facile de l'antenne en site et en azimut. Cependant, il n'est pas prévu d'adapter à une telle structure un système de support permettant d'orienter la coupole dans toutes les directions à partir d'un pivot central formant une articulation universelle.

L'invention a pour objet une nouvelle structure de support constituée également par un assemblage de barres et de noeuds, n'ayant pas ces inconvénients et présentant cependant les qualités requises de facilité de montage et de rigidité.

Conformément à l'invention, la structure de support est portée par une pièce d'assemblage comprenant une colonne centrale s'étendant le long de l'axe xx', entre le noeud central du treillis concave et une base élargie perpendiculaire à l'axe xx' et formé de trois bras s'étendant suivant trois plans formant des dièdres de 120° dans lesquels sont placés trois noeuds du treillis concave et trois noeuds du treillis extérieur reliés respectivement par des barres obliques à des points d'ancrage ménagés aux extrémités des bras correspondants, les trois noeuds intermédiaires du treillis concave et du treillis extérieur étant reliés chacun par une paire de barres de contreventement à deux points d'ancrage ménagés sur les deux bras s'étendant de part et d'autre du plan axial passant par le noeud intermédiaire correspondant, chaque noeud intermédiaire étant placé sommet d'un triangle isocèle ayant pour côté les deux barres de contreventement et pour base la pièce d'assemblage.

Il est important de pouvoir règler sur place le profil de la surface réfléchissante et par conséquent du treillis concave qui la supporte.

A cet effet, selon une caractéristique essentielle, la structure de support comprend un moyen de règlage de la longueur des barres permettant de positionner avec précision les différents noeuds du treillis.

De préférence, chaque noeud est constitué par une pièce massive en forme de noix à plusieurs faces sur lesquelles sont ménagés les alésages dont les axes sont orientés suivant les directions des barres aboutissant aux noeuds.

Des parties filetées ménagées sur les extrémités des barres constituent le moyen de règlage de la longueur des barres, avec des écrous et contre-écrous vissés sur les parties filetées pour le blocage de la longueur de la barre à la valeur choisie.

L'invention sera mieux comprise grâce à la description qui va suivre d'un mode de réalisation particulier, donné à titre d'exemple et représenté sur les dessins annexés.

La figure 1 représente, en coupe axiale et partiellement en perspective, une structure de support réalisée selon l'invention.

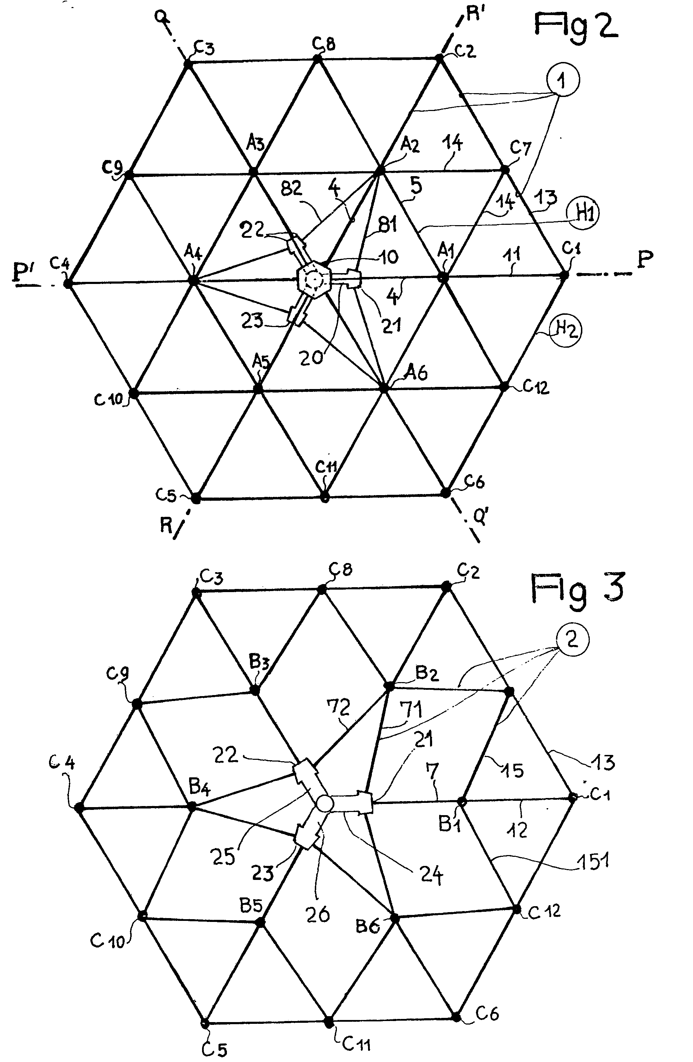

La figure 2 est une vue de dessus schématique de la structure de support.

La figure 3 est une vue de dessus du treillis de raidissement le treillis concave étant enlevé.

La figure 4 est une vue en coupe axiale du mode de fixation des barres sur les noeuds.

La figure 5 est une vue de côté en élévation, de la pièce centrale d'assemblage.

La figure 6 est une vue de dessus de la pièce centrale d'assemblage.

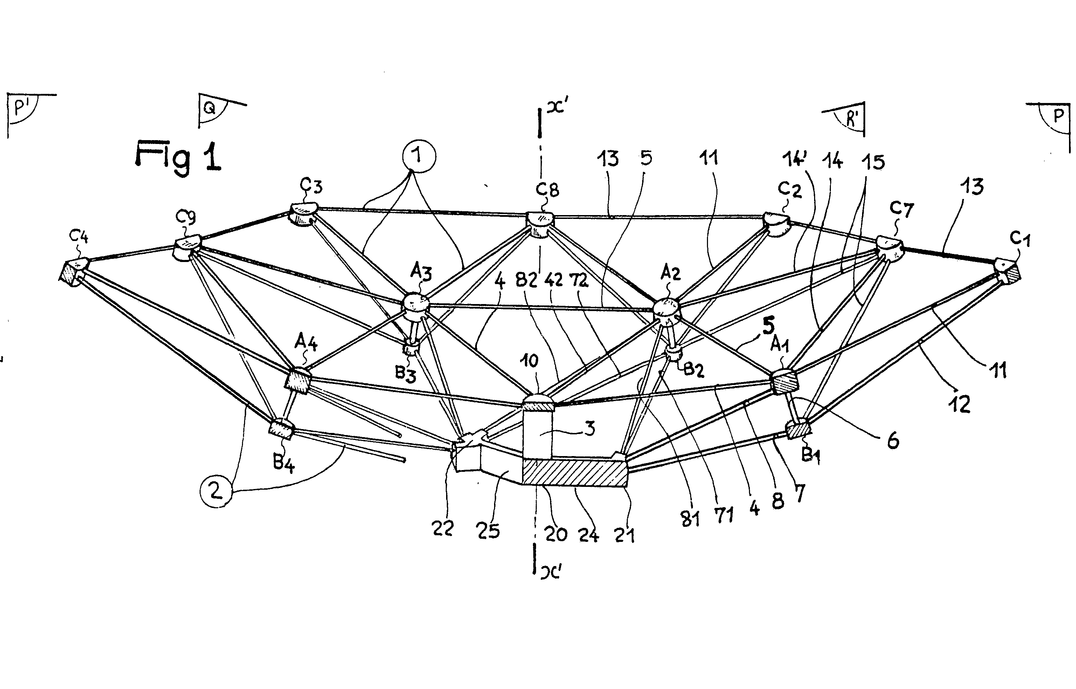

Sur la figure 1, on a représenté en élévation une structure de support coupée par un plan passant par l'axe de visée et dont la partie arrière est représentée en perspective. La structure de support se compose d'un treillis interne concave 1 et d'un treillis externe concave 2 se développant à partir de deux noeuds centraux, respectivement 10 et 20 centrés sur l'axe de visée xx' et reliés entre eux par une colonne 3 s'étendant le long de cet axe.

Chaque treillis est constitué par un ensemble de barres reliées par des noeuds et sur la figure 3 qui est une vue de dessus, on voit que les noeuds du treillis interne concave 1 se projettent suivant les sommets de deux hexagones concentriques, un hexagone interne H1 et un hexagone externe H2 de telle sorte que les barres du treillis interne concave 1 se projettent suivant les côtés d'un ensemble de triangles équilatéraux.

Comme on le voit sur la figure 1, les orientations et les longueurs des barres sont choisies de telle sorte que, en coupe par un plan radial passant par l'axe, les barres du treillis concave enveloppent une parabole, la surface réfléchissante ayant ainsi la forme d'un paraboloïde concentrant les rayons captés vers son foyer.

L'hexagone intérieur H1 passe donc par les noeuds intérieurs A1, A2, A3 ... A6 alors que l'hexagone extérieur H2 passe par les noeuds C1, C2, C3 ... C12.

A chaque noeud intérieur A1, A2 du treillis interne concave 1, est associé un noeud intérieur B1, B2 du treillis extérieur concave 2 représenté en vue de dessus sur la figure 3. Les couples de noeuds (A, B) sont reliés par des barres 6.

Si l'on coupe la structure de support par trois plans (P, Q, R) passant par l'axe et respectivement par les trois noeuds A1, A3, A5 de façon à former des dièdres de 120°, les barres placées dans chacun de ces plans forment trois demi-fermes indéformables.

Ainsi, dans le demi-plan radial P qui correspond au plan de la figure 1 et qui passe par les noeuds A1, B1, C1, l'ensemble des barres reliant entre eux ces noeuds forme une demi-ferme ayant poinçons la colonne 3 et la barre 6 et constituée parle triangle formé par les barres 6, 11, 12 et par le quadrilatère formé par les barres 3, 4, 6, 7, rendu indéformable par la barre oblique 8 reliant le noeud central 20 du treillis extérieur concave 2 au noeud interne A1 du treillis intérieur concave 1.

Cette disposition assure la tenue au déversement dans le demi-plan P et il en est de même dans les demi-plans Q et R. Selon une caractéristique supplémentaire de l'invention, les points d'ancrage 21, 22, 23 des barres 7 et 8 sur le noeud central 20 sont écartés autant que possible de l'axe xx' dans les demi-plans P, Q, R et placés par conséquent aux sommets d'un triangle équilatéral, le noeud central 20 étant avantageusement constitué de trois bras 24, 25, 26. On peut ainsi donner une inertie importante aux demi-fermes constituées dans les plans P, Q, R sans allonger exagérement la colonne centrale 3.

D'autre part, les trois autres noeuds A2, A4, A6 de l'hexagone intérieur H1 placés dans les plans bissecteurs P' Q' R' des dièdres formés par les demi-plans P, Q, R, sont reliés chacun aux deux points d'ancrages du noeud central 20, placés de part et d'autre dudit plan bissecteur, par une paire de barres de contreventement formant un triangle isocèle dont la base est constituée par les points d'ancrage du noeud central.

Ainsi le noeud A2 placé dans le demi-plan R' est relié aux points d'ancrage 21, 22 par une paire de barres de contreventement, respectivement 81, 82 qui le bloquent en rotation autour de l'axe xx' et il en est de même pour le noeud associé B2 du treillis concave externe 2 qui est également relié aux points d'ancrage 21 et 22 par une paire de barres de contreventement 71, 72. En outre, le noeud A2 est relié au noeud central 10 du treillis interne concave 1 par une barre radiale 42 qui assure la tenue au déversement du couple A2, B2.

La même disposition est adoptée pour les couples de noeuds A4, B4 et A6, B6 placés dans les demi-plans P' et Q' qui comme le couple A2 B2 sont ainsi bloqués simultanément en rotation autour de l'axe de visée xx' et de l'axe perpendiculaire à celui-ci et au demi-plan radial dans lequel ils sont placés.

Les autres sommets A1 A3 A5 de l'hexagone 4 sont également bloqués en rotation autour de l'axe xx' par les barres 5 formant les côtés de l'hexagone H1 et qui relient chacun d'eux aux deux sommets qui l'encadrent et qui sont eux-mêmes bloqués en rotation chacun par une paire de barres de contreventement.

L'hexagone extérieur H2 a pour sommets 6 noeuds externes C1, C2 ... C6 et passe par 6 noeuds intermédiaires C7, C8 ... C12. Tous ces noeuds sont reliés entre eux par des barres 13 qui forment les côtés de l'hexagone H2.

Chaque sommet tel que C1 est relié au couple de noeuds internes A1, B1 placés dans le même demi-plan radial par deux barres 12 et 12 qui forment, avec la barre 6 correspondant, un triangle indéformable et assurent donc la tenue au déversement du noeud C1.

Chaque noeud intermédiaire tel que C7 est relié à chacun des deux couples de noeuds internes tels que A1 B1 et A2 B2 placés dans les demi-plans P et R' qui l'encadrent, par une paire de barres 14, 15 qui assurent sa tenue au déversement.

Par ailleurs, l'ensemble de triangles formés par les barres 5, 14, 14' et 11, 13, 14 reliant deux à deux les noeuds internes A et externes C du treillis concave (1) et s'appuyant sur l'hexagone H1, assure la rigidité torsionnelle de l'hexagone H2.

Enfin, les noeuds internes B1, B3, B5 placés dans les demi-plans P, Q, R, passant par les points d'ancrage 21, 22, 23 sont également bloqués en rotation autour de l'axe xx' par les barres 15 et 151 qui les relient aux noeuds intermédiaires tels que C7 et C12 placés de part et d'autre du demi-plan radial correspondant et eux-mêmes bloqués en rotation.

Les dispositions qui viennent d'être décrites et qui permettent de bloquer en rotation autour de l'axe de visée et d'un axe perpendiculaire tous les noeuds internes et externes de la structure de support assurent donc la tenue au déversement et la rigidité torsionnelle de celle-ci, quelle que soit son orientation, tout en dégageant entièrement le côté de la concavité.

On notera que l'inertie de l'ensemble suivant l'axe xx' est fonction de l'écartement des noeuds centraux et des noeuds internes et par conséquent de la longueur donnée de la colonne centrale 3 et aux barres 6 placées entre les noeuds internes.

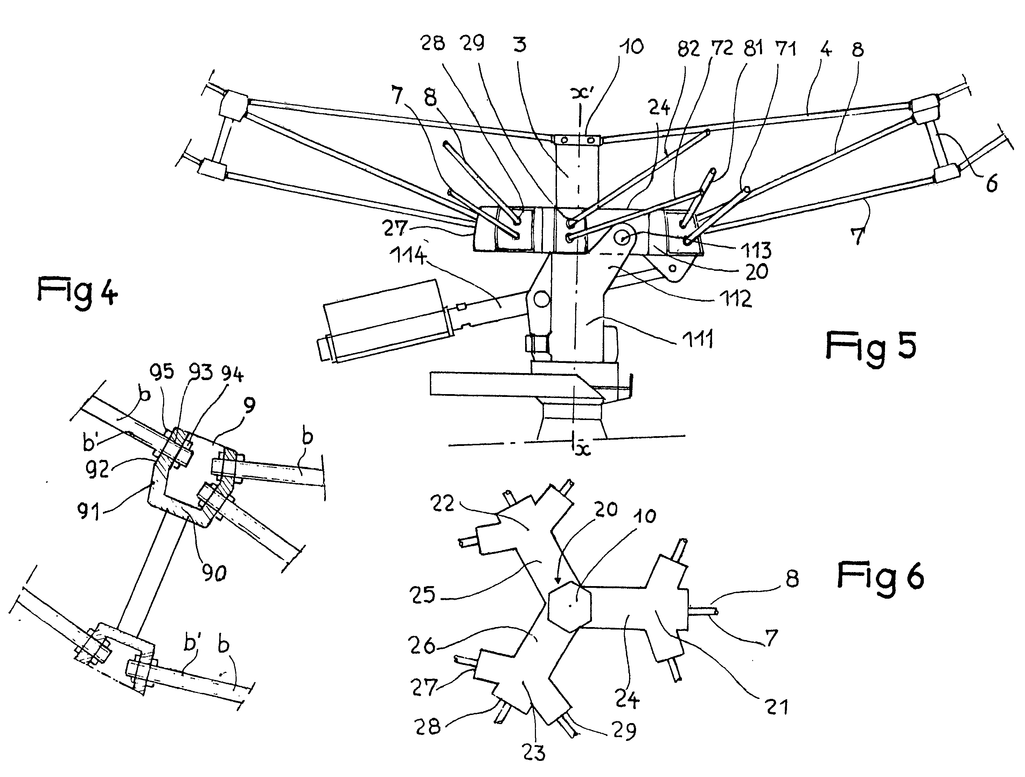

En outre, l'ensemble est léger et facilement démontable. La constitution du noeud central 20 en trois bras écartés 24, 25, 26 permet un montage facile sur un pivot articulé (figure 5) constitué d'une colonne 111 centrée sur l'axe xx' et portant une chape 112 articulée sur l'un des bras 24 du noeud central 20 autour d'un axe 113 orthogonal à l'axe xx'.

La colonne 111 peut tourner autour de l'axe xx' en entraînant l'ensemble de la structure porteuse, celle-ci pouvant être orientée autour de l'axe 118 par un vérin 114 dont les deux éléments sont articulés l'un sur la colonne 111 et l'autre sur l'extrémité du bras 24.

Ainsi peut être assurée simplement l'orientation en Azimut et en Site de la structure porteuse.

D'autre part, comme onle voit notamment sur la figure 6, chaque bras tel que 24 porte à son extrémité trois faces d'ancrage 27, 28, 29 l'une (27) orientée dans la direction du bras 24 pour la fixation des barres 7 et 8 de liaison avec les noeuds internes A1 B1 placés dans le même demi-plan radial P les deux autres étant orientées vers les deux couples de noeuds internes A2 B2, A6 B6 placés de part et d'autre du demi-plan P pour la fixation des barres de contreventement.

Selon une autre caractéristique importante de l'invention, l'assemblage des noeuds et des barres sera fait de la façon représentée à echelle agrandie sur la figure 4 qui est une coupe de deux noeuds internes par un demi-plan radial.

Chaque noeud est constitué par une pièce métallique massive en forme de noix 9 comportant un fond 90 et des faces latérales 91 limitant un évidement central et formant des facettes 92 perpendiculaires aux axes des barres (b) qui convergent sur le noeud considéré et dont les directions dépendent de la position de celui-ci. En raison des symétries, chaque type de noeud A B ou C peut en effet prendre deux formes selon que le noeud considéré est placé dans l'un des demi-plans P, Q, R ou dans les demi-plans bissecteurs P' Q' R'.

Chaque facette (92) de la noix (9) est percée, dans l'axe de la barre (b) correspondante, d'un alésage (93) de même diamètre, dans lequel s'engage l'extrémité (b') de la barre. Celle-ci est filetée et est bloquée en position règlable par un écrou (94) et un contre-écrou (95) qui s'appuient de part et d'autre de la facette (92). Après le montage de l'ensemble sur le site, on peut donc, par exemple en se servant d'un gabarit, règler la position des noeuds du treillis interne 1 de façon à assurer la géométrie de celui-ci avec une grande précision, ce qui est très important pour la qualité du réflecteur.

Dans l'exemple représenté, le réflecteur a une forme parabolique. Sans changer la disposition générale des barres et des noeuds mais en modifiant seulement leurs longueurs et leurs orientations, on pourrait cependant donner au réflecteur une autre forme, par exemple sphérique.

D'autre part, la structure décrite comportant un hexagone intérieur H1 et un hexagone extérieur H2 convient pour les dimensions de réflecteur normales dans ce type de matériel, mais on pourrait évidemment conserver le même principe de construction pour réaliser un treillis plus grand comportant par exemple une série de noeuds supplémentaires ou bien ayant une triangulation plus serrée.

Ainsi, la structure porteuse faisant l'objet de l'invention est à la fois légère, parfaitement rigide et facilement démontable. Le profil de la surface réfléchissante peut être régle avec précision. En outre, le côté de la concavité est dégagé de tout élément pouvant faire de l'ombre sur le miroir et, la totalité de la structure étant dessous des miroirs, le nettoyage de ces derniers sera plus facile, notamment avec un outillage automatique articulé autour de l'axe de la pièce centrale.

## Revendications

1. Structure de support pour capteur solaire comprenant deux ensembles de barres reliées par des noeuds d'assemblage et formant deux treillis triangulés superposés, un premier ensemble (1) en forme de coupole concave centrée sur un axe de visée xx' et se développant, autour d'un noeud central (10) placé sur l'axe xx', à partir de six noeuds A1, A2, ... A6 formant un hexagone intérieur H1, et un second ensemble (2) de raidissement du treillis concave, placé du côté extérieur à celui-ci et se développant à partir de six noeuds B1, B2, ... B6 formant un hexagone et reliés aux noeuds correspondants A1, A2, ... A6 du treillis concave, chacun par une barre d'écartement (6) formant poinçon, caractérisé par le fait qu'elle est portée par une pièce d'assemblage comprenant une colonne centrale (3) s'étendant le long de l'axe xx', entre le noeud central (10) du treillis concave (1) et une base élargie (20) perpendiculaire à l'axe xx' et formée de trois bras (24, 25, 26) s'étendant suivant trois plans (P, Q, R) formant des dièdres de 120° dans lesquels sont placés trois noeuds A1, A3, A5 du treillis concave (1) et trois noeuds (B1, B3, B5) du treillis extérieur (2) reliés repectivement par des barres obliques (7, 8) à des points d'ancrages (21, 22, 23) ménagés aux extrémités des bras (24, 25, 26), les trois autres noeuds (A2, A4, A6) du treillis concave (1) et (B2, B4, B6) du treillis extérieur (2) étant reliés respectivement à deux points d'ancrage (21, 22, 23) de la base (20) par des paires de barres de contreventement (71, 72, 81, 82) formant chacune un triangle isocèle ayant pour sommet le noeud correspondant et pour base, les deux points d'ancrage.

2. Structure de support selon l'une des revendications précédentes, caractérisé par le fait qu'elle comprend un moyen de réglage (94, 45) de la longueur des barres pour le réglage du positionnement des différents noeuds.

3. Structure de support selon l'une des revendications précédentes, caractérisé par le fait que chaque noeud est constitué par une pièce massive formant une noix (9) comprenant des facettes (92) en nombre égal à celui des barres (6) aboutissant au noeud, orientés perpendiculairement aux directions de celles-ci et munies d'alésages (93) dans lesquels s'engagent les estrémités (b') des barres (b).

4. Structure de support selon les revendications 6 et 7, caractérisé par le fait que les extrémités (b') des barres (b) sont filetées et bloquées en position règlable sur la noix 9 chacune par un écrou (94) et un contre-écrou (95) vissés sur l'extrémité filetée (b') et s'appuyant de part et d'autre de la facette (92) correspondante.


**Patentansprüche**

1. Sonnenkollektor-Tragkonstruktion bestehend aus zwei Anordnungen Stangen, die über Knotenverbände miteinander verbunden sind und zwei übereinanderliegende triangulierte Gitter bilden, wobei eine erste auf eine Visierachse xx' zentrierte als konkave Kuppel ausgebildete Anordnung (1) ausgehend von sechs einen Innensechskant bildende Knoten A1, A2 . . . A6 sich um einen in der Achse xx' liegender Hauptknoten (10) ausbildet, und wobei zur Versteifung des konkaven Gitters eine zweite an der Außenseite des letzteren angeordnete Anordnung (2) sich ausgehend von sechs einen Sechskant bildende Knoten B1, B2 . . . B6 ausbildet, die mit den entsprechenden Knoten A1, A2 . . . A6 des konkaven Gitters jeweils über eine als Aufrichter ausgebildete Abstandsstange (6) verbunden sind, dadurch gekennzeichnet, daß sie über ein Anschlußstück bestehend aus einer mittigen Säule (3) abgestützt wird, die sich zwischen dem zentralen Knoten (10) des konkaven Gitters (1) und einer erweiterten zur Achse xx' senkrechten Unterlage (20) entlang der Achse xx' erstreckt — die mittige Säule (3) besteht aus drei Armen (24, 25, 26), die sich in drei 120° Dieder bildende Ebenen (P, Q, R) erstrecken, in denen drei Knoten (A1, A3, A5) des konkaven Gitters (1) und drei Knoten (B1, B3, B5) des Außengitters (2) angeordnet sind, die jeweils über Diagonalstangen (7, 8) mit an den Enden der Arme (24, 25, 26) vorgesehene Verankerungspunkte (21, 22, 23) verbunden sind — wobei die drei anderen Knoten (A2, A4, A6) des konkaven Gitters (1) und (B2, B4, B6) des Außengitters (2) jeweils an zwei Verankerungspunkte (21, 22, 23) über paarweise angeordnete Verstrebungsstangen (71, 72, 81, 82), die jeweils ein Schenkelgleiches Dreieck bilden, das als Spitze den entsprechenden Knoten und als Fuß die beiden Verankerungspunkte aufweist, angeschlossen sind.

2. Tragkonstruktion nach Anpruch 1, dadurch gekennzeichnet, daß sie zur Positionierung der einzelnen Knoten ein Einstellmittel (94, 95) für die Stangenlänge umfaßt.

3. Tragkonstruktion nach Anspruch 1 und 2, dadurch gekennzeichnet, daß jeder Knoten aus einem ein Gelenkstein (9) bildendes Massivteil mit einer der Anzahl der zum Knoten führenden Stangen (6) entsprechenden Anzahl Flächen (92) besteht, die senkrecht zu den Stangenrichtungen ausgerichtet sind und zur Aufnahme der Enden (b') der Stangen (b) Bohrungen (93) aufweisen.

4. Tragkonstruktion nach Anpruch 2 und 3, dadurch gekennzeichnet, daß die Enden (b') der Stangen (b) ein Gewinde aufweisen und über jeweils eine auf das gewindete Ende (b') aufgeschraubte, an beiden Seiten der entsprechenden Fläche (92) sich abstützende Mutter (94) und Gegenmutter (95) an dem Gelenkstein (9) in einer einstellbaren Stellung festgestellt sind.


**Claims**

1. Supporting structure for a solar collector comprising two sets of rods connected by assembly joints and forming two superposed triangle-based lattices, a first set (1) in the shape of a concave dome centered on a sighting axis xx' and developed, around a central joint (10) placed on the axis xx', from six joints A1, A2, ... A6 which form an inner haxagon H1, and a second set (2) for stiffening the concave lattice, placed on the outer side of the latter and developed from six joints B1, B2, ... B6 which form a hexagon and are connected to the corresponding joints A1, A2, ... A6 of the concave lattice, each by a separating rod (6) forming a kingpost, characerised in that the structure is carried by an assembly member comprising a central column (3) extending along the axis xx', between the central joint (10) of the concave lattice (1) and a widened base (20) perpendicular to the axis xx' and formed by three arms (24, 25, 26) extending along three planes (P, Q, R) forming 120° dihydra in which are placed three joints A1, A3, A5 of the concave lattice (1) and three joints (B1, B3, B5) of the outer lattice (2) which are connected respectively by oblique rods (7, 8) to anchoring points (21, 22, 23) arranged at the ends of the arms (24, 25, 26), the other three joints (A2, A4, A6) of the concave lattice (1) and (B2, B4, B6) of the outer lattice (2) being connected respectively to two anchoring points (21, 22, 23) of the base (20) by pairs of crossbracing rods (71, 72, 81, 82), each pair forming an isosceles triangle having as its apex the corresponding joint and as its base the two anchoring points.

2. Supporting structure according to claim 1, characterised in that it comprises a means for adjusting (94, 45) the length of the rods for adjusting the positioning of the various joints.

3. Supporting structure according to claims 1 and 2, characterised in that each joint consists of a massive member forming a clamp (9) comprising facets (92) equal in number to that of the rods (6) terminating at the joint, which are oriented at right angles to the directions of the rods and provided with bores (93) in which the ends (b') of the rods (b) are engaged.

4. Supporting structure according to Claims 2 and 3, characterised in that the ends (b') of the rods (b) are threaded and locked in an adjustable position in the clamp 9, each by a nut (94) and a counter-nut (95) which are screwed onto the threaded end (b') and bearing on each side of the corresponding facet (92).

Fig 1

0 082 068

Fig 2

Fig 3

Fig 4

Fig 5

Fig 6